# EUROPEAN PATENT SPECIFICATION

(11) **EP 2 835 623 B1**
(45) Date of publication and mention of the grant of the patent: **10.05.2017**
(21) Application number: 14180049.0
(22) Date of filing: 06.08.2014
(51) Int. Cl.: G01K 15/00

(54) **Temperature calibration arrangement and calibration oven comprising such an arrangement**
Temperaturkalibrierungsanordnung und Kalibrierungsofen mit einer derartigen Anordnung
Dispositif d'étalonnage de température et four d'étalonnage comprenant un tel agencement

(30) Priority: 08.08.2013 NL 2011283
(43) Date of publication of application: 11.02.2015
(73) Proprietor: Tradinco Instrumenten-Apparaten B.V., 2651 BD Berkel en Rodenrijs (NL)
(72) Inventor: Geluk, Joost Cornelis, 2342 AL Oegstgeest (NL)
(74) Representative: Nederlandsch Octrooibureau

(56) References cited:
- CN-U- 201 885 829
- FR-A1- 2 616 541
- US-A- 4 901 257
- US-A1- 2012 000 540

## Description

### Field of the invention

The invention relates to a temperature calibration arrangement, comprising an enclosure having one or more inner surfaces and a calibrator block having one or more outer surfaces, wherein the calibrator block is positioned in the enclosure with the outer surfaces of the block positioned at a distance from the inner surfaces of the enclosure, the calibrator block having a longitudinal direction and a radial direction and being provided with a cavity suitable for receiving a temperature probe to be calibrated, wherein the enclosure is provided with an inlet for allowing gas to flow into the enclosure, past the outer surfaces of the calibrator block, wherein the enclosure is provided with an outlet for allowing the gas to flow out of the enclosure.

### Background of the invention

Such a temperature calibration arrangement is known. With the known arrangement the calibrator block is placed in a dry-block calibration oven having electronic temperature regulation means for accurately controlling the temperature inside the oven. A user places a temperature probe or a so-called 'unit under test' (UUT), such as a thermo couple or a resistance thermometer, in the cavity in the calibrator block. The oven is then set at a predetermined temperature to calibrate the temperature probe.

A similar temperature calibration arrangement is known from US 2012/0000540 A1. This patent publication describes a temperature calibration device according to the abovementioned type, wherein the calibrator block is provided with a thermally insulating material. A number of channels are arranged in the calibrator block or the insulation material for allowing cooling of the calibrator block. The channels are connected to a gas supply and a control system is furthermore for activating or deactivating the gas supply. Usually, the gas will be air. Paragraph [0028] of US 2012/0000540 A1 discloses the presence of a valve in the channels for closing or opening for the air flow provided by the fan.

Furthermore, from FR 2.616.541 a device is known for calibrating temperature probes, having a fan for providing a circulating flow of air in a region where the temperature probes are to be arranged during calibration.

A disadvantage of the known temperature calibration arrangements is that the temperature distribution in the calibrator block is still relatively non-homogeneous, especially in the axial direction, and therefore calibration accuracy is relatively low.

Another disadvantage of the known temperature calibration arrangements is that cooling of the calibrator block takes a relatively long time.

It is therefore an object of the present invention to provide a temperature calibration arrangement wherein the temperature distribution in the calibrator block is relatively more homogenous such that better calibration accuracy can be achieved and wherein cooling of the calibrator block can be achieved in relatively less time.

### Summary of the invention

Hereto the temperature calibration arrangement as defined in claim 1 is provided. The inlet and optionally the outlet is provided with a shutter that is moveable between a first position wherein the inlet, respectively the outlet, is open to allow gas to flow through the inlet into the enclosure, respectively the outlet, to allow gas to flow out of the enclosure, and a second position in which the inlet, respectively the outlet, is closed preventing gas from flowing through the inlet into the enclosure, respectively the outlet, preventing gas from flowing out of the enclosure.

By providing such a shutter a much more homogenous temperature distribution in the calibrator block can be achieved as the enclosure can be fully closed off by the shutter to achieve optimal isolation of the space within the enclosure, allowing a more homogenous temperature distribution in the calibrator block and therefore higher calibration accuracy. Furthermore, the provision of such a shutter is that the calibrator block can be cooled relatively fast when the shutter is in the open position allowing even higher yields of calibrated temperature probes and thus further reduction of calibration costs.

This also allows for higher production rates of calibrated temperature probes.

It should be noted that the temperature calibration arrangement according to US 2012/0000540 A1 does not allow control of gas flowing into and out of the enclosure. It only allows control of a flow of gas already inside the enclosure, i.e. to either guide the gas flow along the calibrator block (valve open) or to guide the gas flow for instance through the thermally insulating material, away from the calibrator block (valve closed). The same holds for the device disclosed in FR 2.616.541.

According to the invention, the enclosure comprises a front wall and an opposing back wall, both extending substantially in the radial direction, and one or more side walls substantially extending in the longitudinal direction and connecting the front and back walls, wherein the inlet is provided in the front wall and the outlet is provided in the back wall. This provides for an enclosure having a compact and relatively simple construction fitting most calibration ovens.

Another embodiment relates to an aforementioned arrangement wherein the shutter comprises a slideable shutter that can be slid over the inlet, respectively the outlet, in a sliding direction, between a first sliding position wherein the inlet, respectively the outlet, is open and a second sliding position in which the inlet, respectively the outlet, is closed by the shutter. Such a shutter system is relatively easy to construct and can be operated from a distance by an electronic control system, such as from outside the oven, if desired. Furthermore, such a shutter system is relatively reliable within a wide range of temperatures. Operation of such a shutter can be achieved by providing an electric motor, for instance a wax motor.

Another embodiment relates to an aforementioned arrangement wherein the inlet, respectively the outlet, comprises a plurality of parallel openings extending in a direction transversal to the sliding direction of the shutter, and the shutter comprises a plurality of similar parallel openings, wherein the plurality of openings of the shutter and the plurality of openings of the inlet, respectively the outlet, are interspaced in the sliding direction in such a way that in the first sliding position the plurality of openings of the inlet, respectively the outlet, are open and in the second sliding position the plurality of openings of the inlet, respectively the outlet, are closed by the shutter. Such a construction provides a relatively easy way for achieving relatively quick and well-controllable opening or closing of the respective inlet and/or outlet.

Another embodiment relates to an aforementioned arrangement wherein the outlet is provided with an access opening for accessing the cavity in the calibration block. Thus, a temperature probe can be placed in the cavity from the exterior of the enclosure.

Another embodiment relates to an aforementioned arrangement wherein the enclosure is provided with shielding means at the access opening for, during use, when a temperature probe is arranged in the cavity, shielding a temperature probe part extending out of the enclosure through the access opening from gas flowing out of the outlet and/or for preventing backflow of gas into the enclosure through the access opening. In this way, calibration accuracy is further increased as backflow is not allowed to influence the temperature of the temperature probe or the temperature distribution in the calibrator block.

Another embodiment relates to an aforementioned arrangement wherein the enclosure is provided with shielding means at the access opening, wherein the shielding means comprise a hollow cylinder extending away from the enclosure, having a longitudinal axis, arranged over the access opening such that its longitudinal axis extends in a direction substantially transversal to the access opening, in such a way, that the temperature probe part is allowed to extend inside the hollow cylinder along the longitudinal axis thereof. Such a construction is relatively easy to provide, while being very effective for preventing backflow.

According to the invention, a fan is arranged near the inlet, upstream thereof, for causing gas to flow into the enclosure via the inlet or for causing gas to flow past the exterior of the enclosure. When the inlet is closed, the fan thus causes the gas to flow over the exterior of the enclosure to cool the exterior of the enclosure, whereas when the inlet is open the gas is allowed to flow toward and past the calibrator block to cool it.

Another embodiment relates to an aforementioned arrangement wherein the calibrator block is connected to the inner surfaces of the enclosure via attachment means configured wherein heat transfer between the calibrator block and the enclosure is minimized. By doing so, calibration accuracy is further increased.

Another aspect of the invention relates to a calibration oven, having one or more oven walls, comprising an aforementioned temperature calibration arrangement, wherein the temperature calibration arrangement is arranged in the oven.

### Brief description of the drawings

Embodiments of a temperature calibration arrangement according to the invention will by way of non-limiting example be described in detail with reference to the accompanying drawings. In the drawings:
Figure 1 shows a perspective view of an exemplary embodiment of a temperature arrangement according to the invention and figure 2 shows a longitudinal cross-section of the temperature calibration arrangement of figure 1;
Figure 3a shows the front wall of the enclosure with the outlet and a shutter slideably arranged thereon; and
Figure 3b shows the front wall of the enclosure with the outlet and a diaphragm-like shutter arranged thereon.

### Detailed description of the invention

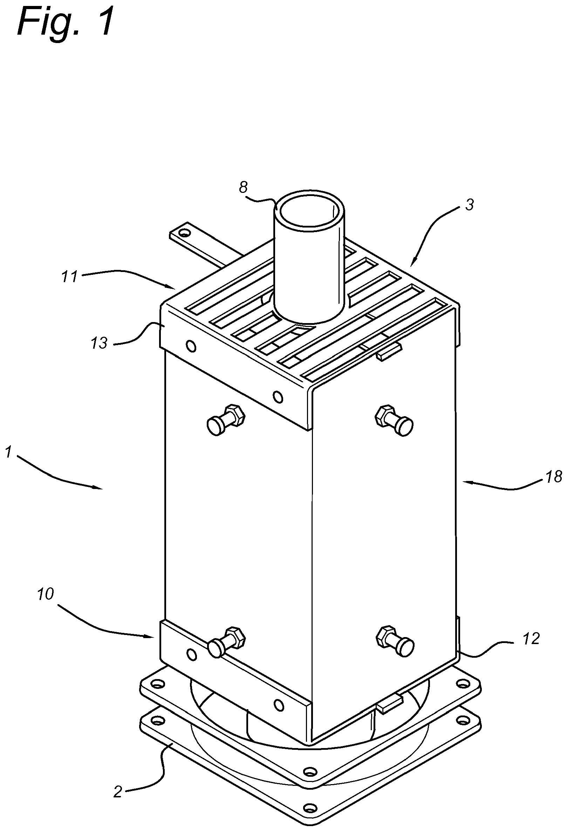

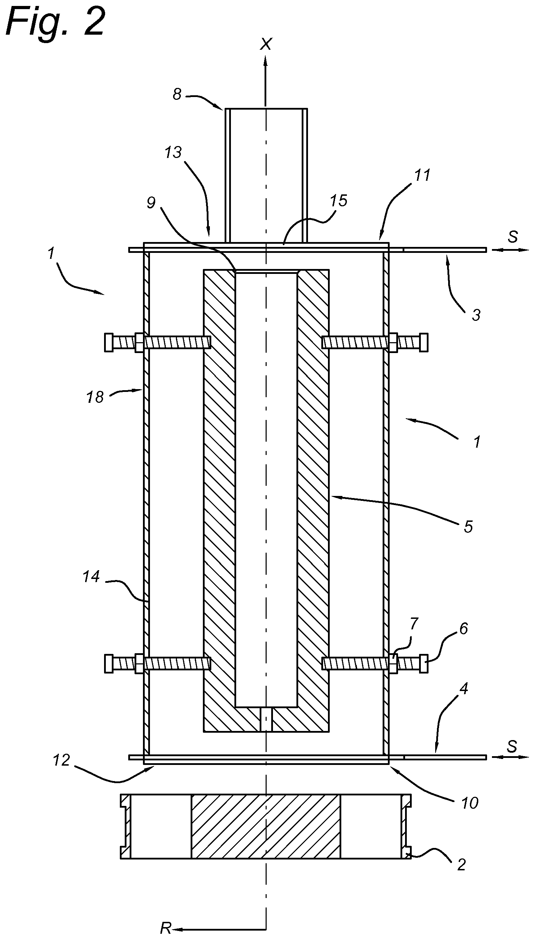

Figure 1 shows a perspective view of an exemplary embodiment of a temperature arrangement according to the invention and figure 2 shows a longitudinal cross-section of the temperature calibration arrangement of figure 1.

Figures 1 and 2 show a temperature calibration arrangement 1, comprising an enclosure in the form of a duct 18. The duct 18 has one or more inner surfaces. A temperature calibrator block 5 having one or more outer surfaces is positioned in the duct 18 in such a way that the outer surfaces of the block 5 are substantially positioned at a distance from the inner surfaces of the duct 18 to ensure gas can flow past the calibrator block 5. The calibrator block 5 is attached to the duct 18 with attachment means comprising multiple pairs of bolts 6 and a nuts 7 configured in such a way that heat transfer between the calibrator block 5 and the duct 18 is minimized and at the same time sufficient distance between the duct 18 and the calibrator block 5 is maintained. This can be achieved, for instance, by having relatively slender bolts 6 and/or by producing the bolts 6 from a material with relatively low heat conductivity.

The calibrator block 5 has a longitudinal direction X and a radial direction R. The calibrator block 5 is provided with a cavity 9, for instance extending in the longitudinal direction, for receiving a temperature probe to be calibrated, such as a thermo couple or a resistance thermometer. Preferably, the cavity 9 has a cylindrical shape.

The duct 18 is provided with an inlet 10 for allowing gas to flow into the duct 18, past the outer surfaces of the calibrator block 5. The duct 18 is furthermore provided with an outlet 11 for allowing the gas to flow out of the duct 18. Gas flow is achieved by activation of a fan 2 arranged near the inlet 10. The inlet 10 and outlet 11 are in fluid communication with the space between the calibrator block 5 and the enclosure 18. According to the invention, the inlet 10 and/or the outlet 11 are provided with a shutter 3 for either allowing the gas flow through the inlet 10, respectively the outlet 11, or for preventing gas flow through the inlet 10, respectively the outlet 11. In the illustrative embodiment as shown in figures 1 and 2, the inlet 10 and outlet 11 are provided with slideable shutters 3, 4 to achieve this. Of course, alternative shutters such as doors are also conceivable. The shutters 3, 4 are allowed to slide in a sliding direction S between a position where the inlet 10 and/or outlet 11 are closed for gas flow through the inlet 10 or outlet 11 and a position wherein they allow gas flow through the inlet 10 or outlet 11, respectively. The shutters 3, 4 can be provided with extended parts extending in the sliding direction S to allow (mechanical) operation from a distance, such as from outside a calibration oven in which the temperature arrangement 1 is to be placed. Preferably, the shutters are made of stainless steel.

The duct 18 can be constructed to have a front wall 13 comprising the outlet 11 and a back wall 12 comprising the inlet 10. The shutters 3, 4 can be slideably arranged over these front and back walls 11, 12. The front wall and back wall 11, 12 are connected by side walls 14. The duct 18 may for instance have a box-like shape, wherein the front and back walls 11, 12 extend at an angle substantially perpendicular to the side walls 14.

The shutters 3, 4 preferably have a plurality of openings, such as rectangular openings, extending in a direction transversal to the sliding direction S of the respective shutter 3, 4. The duct 18 area comprising the inlet 10, respectively the outlet 11, such as the back wall 12 or the front wall 13, may analogously comprise a plurality of similar parallel openings 16. The plurality of openings of the respective shutter 3, 4 and the plurality of openings of the inlet 10, respectively the outlet 11, are preferably interspaced in the sliding direction S in such a way that in the first sliding position the plurality of openings of the inlet, respectively the outlet, are open and in the second sliding position the plurality of openings of the inlet, respectively the outlet, are closed by the shutter 3, 4. The combination of openings in the shutter 3, 4 and the duct 18 thus sort of resemble a louver-like system. This allows for relatively easy control of gas flow into (and out of) the duct 18.

In figures 1 and 2 the duct 18 as shown can be accessed via an access opening 15, such as a circular opening, provided with shielding means in the form of a hollow cylinder 8 for shielding a temperature probe part (not shown) extending out of the duct 18 through the access opening 15 from gas flowing out of the outlet 11 and/or for preventing backflow of gas into the duct 18 through the access opening 15. This ensures the temperature probe is calibrated as accurately as possible, i.e. preferably only via heat transfer from the calibrator block 5.

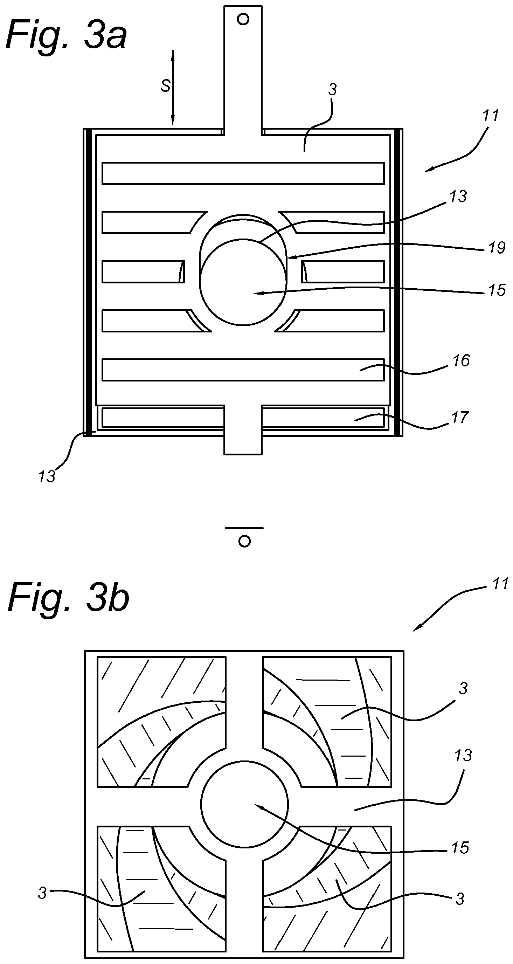

Figure 3a shows the front wall 13 with the outlet 11 and a shutter 3 slideably arranged thereon. Both the front wall 13 and the shutter 3 are provided with a plurality of matching, rectangular openings (resembling a louver system). The shutter 3 is furthermore provided with an oval opening 19 having a diameter with a longer and a shorter axis of which the longer axis is aligned with the sliding direction S. The oval opening 19 allows the access opening 15 to be accessible in all sliding positions of the shutter 3 with respect to the front wall 13. Of course, the inlet 10 at the back wall 12 when provided with the shutter 4 may be provided with a similar shutter or louver system (with similar openings).

Figure 3b shows the front wall 13 with the outlet 11 and a shutter 3 having a diaphragm-like construction arranged thereon. To achieve the closed position the diaphragm blades of the shutter 3 move in a radial direction towards the centre of the diaphragm, whereas to achieve the open position the diaphragm blades move away from the centre.

Thus, the invention has been described by reference to the embodiments discussed above. It will be recognized that these embodiments are susceptible to various modifications and alternative forms well known to those of skill in the art without departing from the spirit and scope of the invention. Accordingly, although specific embodiments have been described, these are examples only and are not limiting upon the scope of the invention.

### Reference numerals

- 1.: Temperature calibration arrangement
- 2.: Fan
- 3.: Outlet shutter
- 4.: Inlet shutter
- 5.: Calibrator block
- 6.: Attachment bolt
- 7.: Nut
- 8.: Insulation cylinder
- 9.: Cavity for temperature probe
- 10.: Inlet
- 11.: Outlet
- 12.: Back wall
- 13.: Front wall
- 14.: Side wall
- 15.: Access opening
- 16.: Elongated opening in outlet shutter
- 17.: Elongated opening in the front wall
- 18.: Duct

## Claims

1. Temperature calibration arrangement (1), comprising an enclosure (18) having one or more inner surfaces and a calibrator block (5) having one or more outer surfaces, wherein the calibrator block is positioned in the enclosure with the outer surfaces of the block positioned at a distance from the inner surfaces of the enclosure, the calibrator block having a longitudinal direction (X) and a radial direction (R) and being provided with a cavity (9) suitable for receiving a temperature probe to be calibrated, wherein the enclosure (18) is provided with an inlet (10) for allowing gas to flow into the enclosure, past the outer surfaces of the calibrator block, wherein the enclosure is provided with an outlet (11) for allowing the gas to flow out of the enclosure, wherein the inlet and optionally the outlet is provided with a shutter (3, 4) that is moveable between a first position wherein the inlet, respectively the outlet, is open to allow gas to flow through the inlet into the enclosure, respectively the outlet, to allow gas to flow out of the enclosure, and a second position in which the inlet, respectively the outlet, is closed preventing gas from flowing through the inlet into the enclosure, respectively the outlet, preventing gas from flowing out of the enclosure, wherein the enclosure comprises a front wall (13) and an opposing back wall (12), both extending substantially in the radial direction, and one or more side walls (14) substantially extending in the longitudinal direction and connecting the front and back walls, **characterized in that** the inlet is provided in the front wall and the outlet is provided in the back wall, and **in that** a fan (2) is arranged near the inlet, upstream thereof, for causing gas to flow into the enclosure via the inlet when the inlet is open or for causing gas to flow past the exterior of the enclosure when the inlet is closed.

2. Arrangement according to claim 1, wherein the shutter comprises a slideable shutter (3, 4) that can be slid over the inlet, respectively the outlet, in a sliding direction (S), between a first sliding position wherein the inlet, respectively the outlet, is open and a second sliding position in which the inlet, respectively the outlet, is closed by the shutter.

3. Arrangement according to claim 2, wherein the inlet, respectively the outlet, comprises a plurality of parallel openings (17) extending in a direction transversal to the sliding direction of the shutter, and the shutter comprises a plurality of similar parallel openings (16), wherein the plurality of openings of the shutter and the plurality of openings of the inlet, respectively the outlet, are interspaced in the sliding direction, wherein, in the first sliding position, the plurality of openings of the inlet, respectively the outlet, are open and in the second sliding position the plurality of openings of the inlet, respectively the outlet, are closed by the shutter.

4. Arrangement according to any of the preceding claims, wherein the outlet is provided with an access opening (15) for accessing the cavity in the calibration block.

5. Arrangement according to claim 4, wherein the enclosure is provided with shielding means (8) at the access opening for, during use, when a temperature probe is arranged in the cavity, shielding a temperature probe part extending out of the enclosure through the access opening from gas flowing out of the outlet and/or for preventing backflow of gas into the enclosure through the access opening.

6. Arrangement according to claim 4 or 5, wherein the enclosure is provided with shielding means (8) at the access opening, wherein the shielding means comprise a hollow cylinder (8) extending away from the enclosure, having a longitudinal axis, arranged over the access opening such that its longitudinal axis extends in a direction substantially transversal to the access opening, wherein the temperature probe part is allowed to extend inside the hollow cylinder along the longitudinal axis thereof.

7. Arrangement according to any of the preceding claims, wherein the calibrator block is connected to the inner surfaces of the enclosure via attachment means (6, 7) configured in such a way that heat transfer between the calibrator block and the enclosure is minimized.

8. Calibration oven, having one or more oven walls, comprising a temperature calibration arrangement according to any of the preceding claims, wherein the temperature calibration arrangement is arranged in the oven.

## Patentansprüche

1. Temperaturkalibrierungsvorrichtung (1), umfassend ein Gehäuse (18) mit einer oder mehreren Innenflächen und einen Kalibratorblock (5) mit einer oder mehreren Außenflächen, wobei der Kalibratorblock im Gehäuse positioniert ist, mit den Außenflächen des Blocks bei einem Abstand von den Innenflächen des Gehäuses positioniert, wobei der Kalibratorblock eine Längsrichtung (X) und eine Radialrichtung (R) hat und mit einer Aushöhlung (9) bereitgestellt ist, die zum Aufnehmen eines zu kalibrierenden Temperaturfühlers geeignet ist, wobei das Gehäuse (18) mit einem Einlass (10) bereitgestellt ist, um Gas zu erlauben, in das Gehäuse, an den Außenflächen des Kalibratorblocks vorbei zu strömen, wobei das Gehäuse mit einem Auslass (11) bereitgestellt ist, um dem Gas zu erlauben, aus dem Gehäuse zu strömen, wobei der Einlass und optional der Auslass mit einem Verschluss (3, 4) bereitgestellt ist, der zwischen einer ersten Position, wobei der Einlass, beziehungsweise der Auslass, offen ist, um Gas zu erlauben, durch den Einlass in das Gehäuse zu strömen, beziehungsweise der Auslass, um Gas zu erlauben, aus dem Gehäuse zu strömen, und einer zweiten Position in der der Einlass, beziehungsweise der Auslass, geschlossen ist, was Gas davon abhält, durch den Einlass in das Gehäuse zu strömen, beziehungsweise der Auslass, was Gas davon abhält, aus dem Gehäuse zu strömen, wobei das Gehäuse eine Vorderwand (13) und eine gegenüberliegende Rückwand (12), die sich beide im Wesentlichen in der Radialrichtung erstrecken, und eine oder mehrere Seitenwände (14) umfasst, die sich im Wesentlichen in der Längsrichtung erstrecken und die Vorder- und Rückwand verbinden,
**dadurch gekennzeichnet, dass**
der Einlass in der Vorderwand bereitgestellt ist und der Auslass in der Rückwand bereitgestellt ist, und dadurch, dass
ein Ventilator (2) nahe dem Einlass angeordnet ist, stromaufwärts davon, um Gas dazu zu veranlassen, über den Einlass in das Gehäuse zu strömen, wenn der Einlass offen ist, oder Gas dazu zu veranlassen, am Äußeren des Gehäuses vorbei zu strömen, wenn der Einlass geschlossen ist.

2. Vorrichtung nach Anspruch 1, wobei der Verschluss einen verschiebbaren Verschluss (3, 4) umfasst, der über den Einlass beziehungsweise den Auslass in einer Gleitrichtung (S) geschoben werden kann, zwischen einer ersten Gleitposition wobei der Einlass, beziehungsweise der Auslass, offen ist, und einer zweiten Gleitposition in der der Einlass, beziehungsweise der Auslass, durch den Verschluss geschlossen ist.

3. Vorrichtung nach Anspruch 2, wobei der Einlass, beziehungsweise der Auslass, eine Vielzahl von parallelen Öffnungen (17) umfasst, die sich in einer Richtung quer zur Gleitrichtung des Verschlusses erstrecken, und der Verschluss eine Vielzahl von ähnlichen parallelen Öffnungen (16) umfasst, wobei die Vielzahl von Öffnungen des Verschlusses und die Vielzahl von Öffnungen des Einlasses, beziehungsweise des Auslasses, in der Gleitrichtung mit Abstand angeordnet sind, wobei in der ersten Gleitrichtung die Vielzahl von Öffnungen des Einlasses, beziehungsweise des Auslasses, offen sind und in der zweiten Gleitposition die Vielzahl von Öffnungen des Einlasses, beziehungsweise des Auslasses, durch den Verschluss geschlossen sind.

4. Vorrichtung nach einem der vorangehenden Ansprüche, wobei der Auslass mit einer Zugangsöffnung (15) zum Zugreifen auf die Aushöhlung im Kalibrierungsblock bereitgestellt ist.

5. Vorrichtung nach Anspruch 4, wobei das Gehäuse mit Abschirmmitteln (8) bei der Zugangsöffnung bereitgestellt ist, zum Abschirmen, während einer Verwendung, wenn ein Temperaturfühler in der Aushöhlung angeordnet ist, eines Temperaturfühlerteils, der sich aus dem Gehäuse heraus durch die Zugangsöffnung erstreckt, von Gas, das aus dem Auslass herausströmt und/oder zum Abhalten eines Rückflusses von Gas in das Gehäuse durch die Zugangsöffnung.

6. Vorrichtung nach Anspruch 4 oder 5, wobei das Gehäuse bei der Zugangsöffnung mit Abschirmmitteln (8) bereitgestellt ist, wobei die Abschirmmittel einen hohlen Zylinder (8) umfassen, der sich weg vom Gehäuse erstreckt, mit einer Längsachse, über der Zugangsöffnung angeordnet, sodass seine Längsachse sich in eine Richtung im Wesentlichen quer zur Zugangsöffnung erstreckt, wobei es dem Temperaturfühlerteil möglich ist, sich innerhalb des hohlen Zylinders entlang der Längsachse davon zu erstrecken.

7. Vorrichtung nach einem der vorangehenden Ansprüche, wobei der Kalibratorblock mit den Innenflächen des Gehäuses über Befestigungsmittel (6, 7) verbunden ist, die auf solche Weise konfiguriert sind, dass ein Wärmeaustausch zwischen dem Kalibratorblock und dem Gehäuse minimiert ist.

8. Kalibrierungsofen mit einer Ofenwand oder mehreren Ofenwänden, umfassend eine Temperaturkalibrierungsvorrichtung nach einem der vorangehenden Ansprüche, wobei die Temperaturkalibrierungsvorrichtung im Ofen angeordnet ist.

## Revendications

1. Agencement d'étalonnage de température (1), comprenant une enceinte (18) comportant une ou plusieurs surfaces intérieures et un bloc étalonneur (5) comportant une ou plusieurs surfaces extérieures, dans lequel le bloc étalonneur est positionné dans l'enceinte avec les surfaces extérieures du bloc positionnées à une distance des surfaces intérieures de l'enceinte, le bloc étalonneur comportant un sens longitudinal (X) et un sens radial (R) et étant pourvu d'une cavité (9) apte à recevoir une sonde de température à étalonner, dans lequel l'enceinte (18) est pourvue d'une entrée (10) pour permettre à un gaz de s'écouler dans l'enceinte, au-delà des surfaces extérieures du bloc étalonneur, dans lequel l'enceinte est pourvue d'une sortie (11) pour permettre au gaz de s'écouler hors de l'enceinte, dans lequel l'entrée et facultativement la sortie est pourvue d'un obturateur (3, 4) qui est mobile entre une première position à laquelle l'entrée est ouverte pour permettre à un gaz de s'écouler à travers l'entrée dans l'enceinte, respectivement la sortie est ouverte pour permettre à un gaz de s'écouler hors de l'enceinte, et une deuxième position à laquelle l'entrée est fermée pour empêcher qu'un gaz ne s'écoule à travers l'entrée dans l'enceinte, respectivement la sortie est fermée pour empêcher qu'un gaz ne s'écoule hors de l'enceinte, dans lequel l'enceinte comprend une paroi avant (13) et une paroi arrière opposée (12), les deux parois s'étendant sensiblement dans le sens radial, et une ou plusieurs parois latérales (14) s'étendant sensiblement dans le sens longitudinal et reliant les parois avant et arrière, **caractérisé en ce que** l' entrée est prévue dans la paroi avant et la sortie est prévue dans la paroi arrière, et **en ce qu'**un ventilateur (2) est agencé à proximité de l'entrée, en amont de celle-ci, pour amener un gaz à s'écouler dans l'enceinte par l'intermédiaire de l'entrée lorsque l'entrée est ouverte ou pour amener un gaz à s'écouler au-delà de l'extérieur de l'enceinte lorsque l'entrée est fermée.

2. Agencement selon la revendication 1, dans lequel l'obturateur comprend un obturateur coulissant (3, 4) qui peut être coulissé sur l'entrée, respectivement la sortie, dans un sens de coulissement (S), entre une première position de coulissement à laquelle l'entrée, respectivement la sortie, est ouverte, et une deuxième position de coulissement à laquelle l'entrée, respectivement la sortie, est fermée par l'obturateur.

3. Agencement selon la revendication 2, dans lequel l'entrée, respectivement la sortie, comprend une pluralité d'ouvertures parallèles (17) s'étendant dans un sens transversal au sens de coulissement de l'obturateur, et l'obturateur comprend une pluralité d'ouvertures parallèles similaires (16), dans lequel la pluralité d'ouvertures de l'obturateur et la pluralité d'ouvertures de l'entrée, respectivement la sortie, sont espacées dans le sens de coulissement, dans lequel, à la première position de coulissement, la pluralité d'ouvertures de l'entrée, respectivement la sortie, sont ouvertes et, à la deuxième position de coulissement, la pluralité d'ouvertures de l'entrée, respectivement la sortie, sont fermées par l'obturateur.

4. Agencement selon l'une quelconque des revendications précédentes, dans lequel la sortie est pourvue d'une ouverture d'accès (15) pour accéder à la cavité dans le bloc étalonneur.

5. Agencement selon la revendication 4, dans lequel l'enceinte est pourvue de moyens de protection (8) à l'ouverture d'accès pour, au cours de l'utilisation, lorsqu'une sonde de température est agencée dans la cavité, protéger une partie de sonde de température s'étendant hors de l'enceinte à travers l'ouverture d'accès contre un gaz s'écoulant hors de la sortie et/ou pour empêcher un retour de gaz dans l'enceinte à travers l'ouverture d'accès.

6. Agencement selon la revendication 4 ou 5, dans lequel l'enceinte est pourvue de moyens de protection (8) à l'ouverture d'accès, dans lequel les moyens de protection comprennent un cylindre creux (8) s'étendant à l'écart de l'enceinte, comportant un axe longitudinal, agencé sur l'ouverture d'accès de sorte que son axe longitudinal s'étende dans un sens sensiblement transversal à l'ouverture d'accès, dans lequel la partie de sonde de température est autorisée à s'étendre à l'intérieur du cylindre creux le long de l'axe longitudinal de celui-ci.

7. Agencement selon l'une quelconque des revendications précédentes, dans lequel le bloc étalonneur est relié aux surfaces intérieures de l'enceinte par l'intermédiaire de moyens d'attache (6, 7) configurés de manière à minimiser un transfert de chaleur entre le bloc étalonneur et l'enceinte.

8. Four d'étalonnage, comportant une ou plusieurs parois de four, comprenant un agencement d'étalonnage de température selon l'une quelconque des revendications précédentes, dans lequel l'agencement d'étalonnage de température est agencé dans le four.
